# EUROPÄISCHE PATENTSCHRIFT

(11) **EP 3 052 337 B1**
(45) Veröffentlichungstag und Bekanntmachung des Hinweises auf die Patenterteilung: **14.06.2023**
(21) Anmeldenummer: 14759221.6
(22) Anmeldetag: 08.09.2014
(51) Int. Cl.: B60L 58/20, B60L 53/20

(54) **VORRICHTUNG ZUR SPANNNUNGSVERSORUNG EINES ELEKTRISCHEN FAHRZEUGS MIT FESTER HAUPBATTERIE UND AUSTAUSCHBARER HILFSBATTERIE**
DEVICE FOR SUPPLYING A VOLTAGE TO AN ELECTRIC VEHICLE COMPRISING A PERMANENT MAIN BATTERY AND A REPLACEABLE AUXILIARY BATTERY
DISPOSITIF D'ALIMENTATION EN TENSION D'UN VÉHICULE ÉLECTRIQUE COMPORTANT UNE BATTERIE PRINCIPALE FIXE ET UNE BATTERIE AUXILIAIRE INTERCHANGEABLE

(30) Priorität: 01.10.2013 DE 102013219967
(43) Veröffentlichungstag der Anmeldung: 10.08.2016
(73) Patentinhaber: Bayerische Motoren Werke Aktiengesellschaft, 80809 München (DE)
(72) Erfinder: LOPEZ DE ARROYABE, Jose, 81541 München (DE)
(86) Internationale Anmeldenummer: PCT/EP2014/069048
(87) Internationale Veröffentlichungsnummer: WO 2015/049089

(56) Entgegenhaltungen:
- WO-A1-2013/061370
- DE-A1-102009 014 386
- DE-U1-212010 000 081
- JP-A- H07 123 514
- JP-A- 2010 028 881

## Beschreibung

Die Erfindung betrifft eine Vorrichtung zum Bereitstellen einer Versorgungsspannung zum Betreiben einer elektrischen Einrichtung eines Fahrzeugs, insbesondere zum Betreiben eines Elektromotors des Fahrzeugs zum Antreiben des Fahrzeugs. Die Erfindung betrifft des Weiteren ein elektrisch angetriebenes Fahrzeug mit einer derartigen Vorrichtung. Weiterhin betrifft die Erfindung ein Verfahren zum Bereitstellen einer Versorgungsspannung zum Betreiben einer elektrischen Einrichtung eines Fahrzeugs, insbesondere zum Betreiben eines Elektromotors des Fahrzeugs, der zum Antreiben des Fahrzeugs dient.

Infolge des gesteigerten Umweltbewusstseins und der immer knapper werdenden Rohstoffe zur Herstellung von Kraftstoffen für Verbrennungsmotoren gewinnt die Elektromobilität zunehmend an Bedeutung. Derzeit fehlt es jedoch an einer ausreichenden Infrastruktur in Bezug auf Ladestationen zum Laden von Batterien von Elektrofahrzeugen. Ladestationen stehen in geringem Maße lediglich für Pkws bereit. Diese Ladestationen weisen Ladestecker auf, die relativ groß sind und insbesondere nicht zum Aufladen von Niederspannungsbatterien elektrisch betriebener Motorräder beziehungsweise Motorroller, die beispielsweise Spannungspegel kleiner als 60 V bereitstellen, geeignet sind.

Zum Aufladen einer Batterie beziehungsweise eines Akkus eines elektrisch betriebenen Autos oder Motorrades ist üblicherweise ein spezielles Ladegerät notwendig, das an eine Schuko-Steckdose angeschlossen werden muss, um die Batterie des Autos beziehungsweise des Motorrads zu laden. Wenn jedoch beispielsweise auf einem Parkplatz oder in einer Tiefgarage eines Miet- beziehungsweise Mehrparteienhauses keine Steckdosen zur Verfügung stehen, gestaltet sich das Aufladen der Batterie eines elektrisch betriebenen Fahrzeugs oftmals für den Fahrer schwierig beziehungsweise ist mit erhöhtem Aufwand verbunden.

In JP H07 123514 A ist ein Fahrzeug gezeigt, dessen Motor von einer Hauptbatterie angetrieben wird. In einem Anhänger ist eine Hilfsbatterie vorgesehen, die über eine Energieübertragungseinheit mit der Hauptbatterie gekoppelt werden kann, um ebenfalls den Motor zu speisen. DE 10 2009 014386 A betrifft einen Energiespeicher und eine Steuerung zur Energieversorgung eines Traktionsnetzes eines Elektrofahrzeugs, wobei mehrere austauschbare Batterieeinheiten über jeweils einen bidirektionalen DC/DC-Wandler an das Traktionsnetz des Elektrofahrzeugs gekoppelt sind. DE 21 2010 000081 U1 beschreibt ein modulares Batteriemanagementsystem zum Verwalten mehrerer Batterien.

Die Aufgabe der vorliegenden Erfindung ist es, eine Vorrichtung zum Bereitstellen einer Versorgungsspannung zum Betreiben einer elektrischen Einrichtung eines Fahrzeugs anzugeben, wobei die Vorrichtung die Versorgungsspannung zuverlässig für lange Zeit zur Verfügung stellt. Eine weitere Aufgabe der vorliegenden Erfindung ist es, ein elektrisch angetriebenes Fahrzeug anzugeben, das für lange Zeit elektrisch betrieben werden kann. Eine weitere Aufgabe der vorliegenden Erfindung ist es, ein Verfahren zum Bereitstellen einer Versorgungsspannung zum Betreiben einer elektrischen Einrichtung eines Fahrzeugs anzugeben, bei dem die Versorgungsspannung zuverlässig für lange Zeit zur Verfügung gestellt werden kann.

Eine Ausführungsform einer Vorrichtung zum Bereitstellen einer Versorgungsspannung zum Betreiben einer elektrischen Einrichtung eines Fahrzeugs ist im Patentanspruch 1 angegeben. Die Vorrichtung umfasst unter anderem einen Versorgungsspannungsanschluss zum Bereitstellen der Versorgungsspannung zum Betreiben des Fahrzeugs, eine Batterie zum Erzeugen der Versorgungsspannung zum Betreiben des Fahrzeugs, wobei die Batterie an den Versorgungsspannungsanschluss angeschlossen ist, und eine Kontaktierungseinrichtung zur Kontaktierung eines wechselbaren Akkus zum Bereitstellen einer Ladespannung zum Aufladen der Batterie. Die Vorrichtung umfasst des Weiteren eine Kopplungseinrichtung zum elektrischen Koppeln des wechselbaren Akkus mit der Batterie, wobei die Kopplungseinrichtung zwischen der Kontaktierungseinrichtung und der Batterie angeordnet ist. Die Kopplungseinrichtung ist dazu ausgebildet, den wechselbaren Akku in Abhängigkeit von einem Ladezustand der Batterie mit der Batterie elektrisch zu koppeln oder zu trennen, wenn der wechselbare Akku mit der Kontaktierungseinrichtung kontaktiert ist.

Ein elektrisch angetriebenes Fahrzeug, das für lange Zeit elektrisch betreibbar ist, ist im Patentanspruch 9 angegeben. Das Fahrzeug umfasst die in einem der Patentansprüche 1 bis 8 angegebene Vorrichtung zum Bereitstellen einer Versorgungsspannung zum Betreiben einer elektrischen Einrichtung des Fahrzeugs. An den Versorgungsspannungsanschluss kann ein Elektromotor des Fahrzeugs zum Antreiben des Fahrzeugs und/oder ein Generator des Fahrzeugs und/oder ein Gleichspannungswandler des Fahrzeugs angeschlossen sein.

Ein Verfahren zum Bereitstellen einer Versorgungsspannung zum Betreiben einer elektrischen Einrichtung eines Fahrzeugs ist im Patentanspruch 10 angegeben. Das Verfahren sieht das Bereitstellen der in einem der Patentansprüche 1 bis 8 angegebenen Vorrichtung zum Bereitstellen einer Versorgungsspannung zum Betreiben der elektrischen Einrichtung eines Fahrzeugs vor. Der wechselbare Akku wird mit der Batterie gekoppelt, wenn der Pegel der von der Batterie bereitgestellten Versorgungsspannung kleiner oder gleich einem ersten Schwellwert ist und der Pegel der von dem wechselbaren Akku erzeugten Ladespannung über einem zweiten Schwellwert liegt. In Abhängigkeit von der Ladespannung des wechselbaren Akkus wird ein in die Batterie fließender Ladestrom erzeugt. Der wechselbare Akku wird von der Batterie getrennt, wenn der Pegel der von der Batterie bereitgestellten Versorgungsspannung über dem ersten Schwellwert liegt.

Batterien, die zum Bereitstellen einer Versorgungsspannung für einen Elektromotor eines Fahrzeugs verwendet werden, sind üblicherweise groß und schwer, da sie eine hohe Antriebsleistung, beispielsweise einen Strom von 300 A, zur Verfügung stellen müssen. Die in Elektrofahrzeugen fest verbauten Batterien beziehungsweise Akkus wiegen beispielsweise bis zu 20 kg. Ein Kontaktierungssystem für einen wechselbaren Akku, der die geforderte Antriebsleistung von beispielsweise 300 A erbringt, ist ebenfalls groß und teuer.

Gemäß der Erfindung wird daher vorgeschlagen die Batterie, die die hohe Leistung zur Verfügung stellen muss, als eine in der Vorrichtung zum Bereitstellen der Versorgungsspannung fest eingebaute Batterie vorzusehen und für den wechselbaren Akku einen kleinen, leichten und kostengünstigen Akku zu verwenden. Die Zellen des wechselbaren Akkus zum Erzeugen der Ladespannung zum Aufladen der fest eingebauten Batterie können auf eine hohe Energiedichte optimiert sein, während die fest eingebaute Batterie zum Erzeugen der Versorgungsspannung, beispielsweise zum Betreiben des Elektromotors des Fahrzeugs, leistungsoptimierte Batteriezellen aufweist.

Während die fest eingebaute Batterie für die Lebensdauer des Fahrzeugs ausgelegt werden muss, kann der wechselbare Akku für eine kürzere Lebensdauer ausgelegt sein. Eine schnelle Erneuerung der Zellchemie in dem wechselbaren Akku ist einfach zu realisieren und kann den Mehrwert für ein gebrauchtes Fahrzeug steigern. Wenn die Batterie zum Bereitstellen der Versorgungsspannung alt wird und an Energie verliert, kann der Energieverlust zumindest teilweise mit einem neuen, energiedichteren Wechselakku kompensiert werden.

Die Kontaktierungseinrichtung kann derart gestaltet sein, dass der wechselbare Akku auf leichte Weise aus der Vorrichtung zum Bereitstellen der Versorgungsspannung entnommen und durch einen anderen wechselbaren Akku ersetzt werden kann. Zum Auswechseln des wechselbaren Akkus ist kein Fachpersonal einer Werkstatt erforderlich. Ein Fahrer kann den wechselbaren Akku selbst auf unkomplizierte Weise erneuern. Die Verwendung eines wechselbaren Akkus in der Vorrichtung zum Bereitstellen der Versorgungsspannung ist insbesondere aufgrund der Entkopplung zwischen der Batterie zum Erzeugen der Versorgungsspannung und des wechselbaren Akkus möglich. Für den wechselbaren Akku können beispielsweise Fahrradakkus, die in hohen Stückzahlen und günstig produziert werden, eingesetzt werden.

Gemäß einer Ausführungsform der Vorrichtung zum Bereitstellen der Versorgungsspannung ist neben dem Laden der fest eingebauten Batterie durch die wechselbare Batterie vorgesehen, dass während des Fahrens erzeugte Energie dazu verwendet werden kann, die fest eingebaute Batterie und/oder den wechselbaren Akku nach einer Entladung wieder aufzuladen. Wenn das Fahrzeug beispielsweise bergab fährt, kann die dabei rückgewonnene Energie durch die Vorrichtung zum Bereitstellen der Versorgungsspannung zum Aufladen der fest eingebauten Batterie und/oder des wechselbaren Akkus verwendet werden.

Die Topologie der Vorrichtung zum Bereitstellen der Versorgungsspannung kann vorsehen, dass mehrere wechselbare Akkus, die in verschiedenen Kontaktierungseinrichtungen angeordnet sind, zum Aufladen der fest eingebauten Batterie verwendet werden können. Über entsprechende Schaltelemente, die in den wechselbaren Akkupacks eingebaut sein können, und die Kopplungseinrichtung können die wechselbaren Akkus wahlweise abwechselnd zum Aufladen der fest eingebauten Hauptbatterie mit dieser gekoppelt werden.

Die Erfindung wird im Folgenden anhand von Figuren, die Ausführungsbeispiele der vorliegenden Erfindung zeigen, näher erläutert. Es zeigen:
- Figur 1A: eine Ausführungsform eines elektrisch angetriebenen Autos mit einer Batterie und einem wechselbaren Akku,
- Figur 1B: eine Ausführungsform eines elektrisch angetriebenen Motorrads mit einer Batterie und einem wechselbaren Akku,
- Figur 2: eine Ausführungsform einer Vorrichtung zum Bereitstellen einer Versorgungsspannung zum Betreiben eines Fahrzeugs,
- Figur 3: eine Ausführungsform einer Vorrichtung zum Bereitstellen einer Versorgungsspannung zum Betreiben eines Fahrzeugs ohne wechselbare Akkus,
- Figur 4: eine Ausführungsform einer Vorrichtung zum Bereitstellen einer Versorgungsspannung zum Betreiben eines Fahrzeugs mit einem wechselbaren Akku zum Aufladen einer Fahrzeugbatterie und zum Nachladen der Batterie und/oder des wechselbaren Akkus,
- Figur 5: eine Ausführungsform einer Vorrichtung zum Bereitstellen einer Versorgungsspannung zum Betreiben eines Fahrzeugs mit mehreren wechselbaren Akkus zum Aufladen einer Fahrzeugbatterie und zum Nachladen der Batterie und/oder des wechselbaren Akkus.

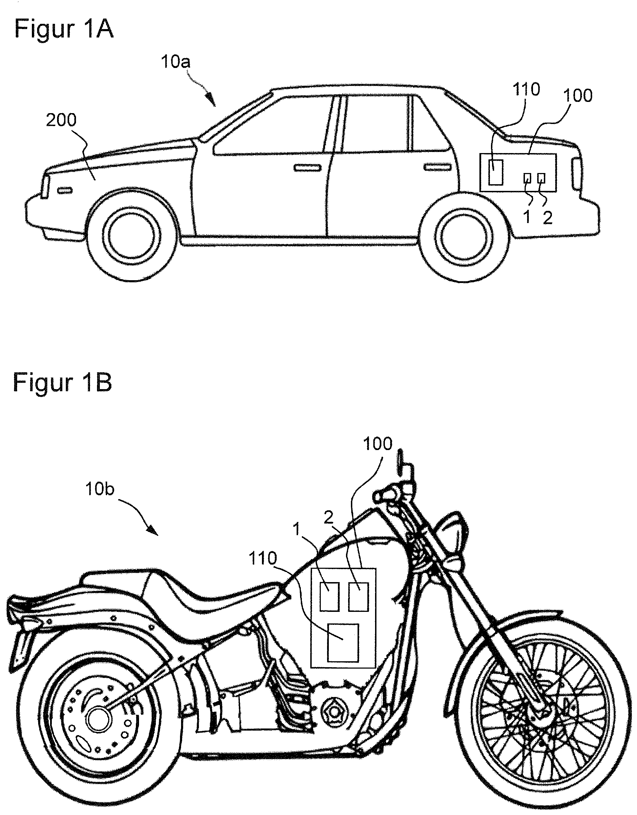

Zum Betreiben von elektrischen Einrichtungen eines Fahrzeugs kann das Fahrzeug eine Vorrichtung zum Bereitstellen einer Versorgungsspannung aufweisen. Eine elektrische Einrichtung kann beispielsweise eine elektrische Schaltung oder ein Elektromotor zum Antreiben des Fahrzeugs sein. Figur 1A zeigt beispielhaft ein Auto 10a und Figur 1B zeigt ein Motorrad 10b mit einer jeweiligen Vorrichtung 100 zum Bereitstellen einer Versorgungsspannung zum Betreiben einer elektrischen Einrichtung des Autos beziehungsweise Motorrads. Im Falle eines elektrisch angetriebenen Fahrzeugs kann die elektrische Einrichtung ein Elektromotor sein.

Die Vorrichtung 100 zum Bereitstellen der Versorgungsspannung zum Betreiben der elektrischen Vorrichtung 200 weist neben einer Hauptbatterie 110 zum Erzeugen der Versorgungsspannung mindestens einen wechselbaren Akku 1, 2 auf. Während die Batterie 110 zum Erzeugen der Versorgungsspannung beispielsweise als ein in der Vorrichtung 100 und somit in dem Fahrzeug 10a, 10b fest eingebauter Hauptakku vorgesehen ist, können die Wechselakkus 1, 2 deutlich kleiner und leichter ausgebildet sein.

Gemäß der Erfindung stellt die Hauptbatterie 110 die Leistung zum Betreiben der elektrischen Einrichtung des Fahrzeugs bereit, während die wechselbaren Akkus 1, 2 zum Aufladen beziehungsweise Nachladen der Hauptbatterie 110 vorgesehen sind. Die Batterie 110 kann zur Bereitstellung einer hohen elektrischen Leistung, beispielsweise zum Bereitstellen einer Spannung zwischen 48 V und 400 V, ausgelegt sein, während die wechselbaren Akkus 1, 2 zur Speicherung einer hohen Energiedichte optimiert sind.

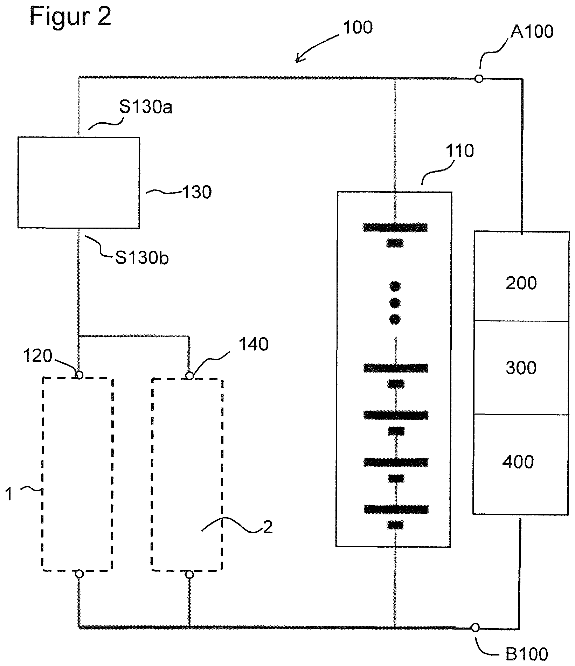

Figur 2 zeigt eine Topologie einer möglichen Ausführungsform der Vorrichtung 100 zum Bereitstellen der Versorgungsspannung zum Betreiben einer elektrischen Einrichtung des Fahrzeugs, beispielsweise zum Betreiben eines Elektromotors eines Autos oder Motorrades zum Antreiben des Autos beziehungsweise Motorrades. Die Vorrichtung 100 umfasst einen Versorgungsspannungsanschluss A100 zum Bereitstellen der Versorgungsspannung zum Betreiben der elektrischen Einrichtung des Fahrzeugs und einen Bezugsspannungsanschluss B100. Die Vorrichtung 100 weist des Weiteren eine Batterie 110 zum Erzeugen der Versorgungsspannung zum Betreiben der elektrischen Einrichtung des Fahrzeugs auf. Die Batterie 110 ist an dem Versorgungsspannungsanschluss A100 angeschlossen.

Die Vorrichtung 100 weist darüber hinaus mindestens eine Kontaktierungseinrichtung 120, 140 zur Kontaktierung mindestens eines wechselbaren Akkus 1, 2 zum jeweiligen Bereitstellen einer Ladespannung zum Aufladen der Batterie 110 auf. Des Weiteren umfasst die Vorrichtung 100 eine Kopplungseinrichtung 130 zum elektrischen Koppeln des mindestens einen wechselbaren Akkus 1, 2 mit der Batterie 110. Die Kopplungseinrichtung 130 ist zwischen der mindestens einen Kontaktierungseinrichtung 120, 140 und der Batterie 110 angeordnet. Die Kopplungseinrichtung 130 ist insbesondere dazu ausgebildet, den mindestens einen wechselbare Akku 1, 2 in Abhängigkeit von einem Ladezustand der fest eingebauten Batterie 110 mit der Batterie 110 elektrisch zu koppeln oder zu trennen, wenn der mindestens eine wechselbare Akku 1, 2 mit der mindestens einen Kontaktierungseinrichtung 120, 140 kontaktiert ist.

Die Vorrichtung 100 zum Bereitstellen der Versorgungsspannung ermöglicht es, während der Fahrt die Batterie 110 durch einen Ladestrom, der aus den wechselbaren Akkus 1, 2 gezogen wird, nachzuladen, während die Batterie 110 gleichzeitig die Versorgungsspannung zum Betreiben der elektrischen Einrichtung des Fahrzeugs, beispielsweise des Elektromotors 200, liefert.

Die Batterie 110 kann in der Vorrichtung 100 als eine fest eingebaute Batterie, deren Zellen leistungsoptimiert ausgelegt sind, angeordnet sein. Die Batterie 110 kann beispielsweise eine Niedervolt- oder eine Hochvoltbatterie, beispielsweise eine Batterie zum Bereitstellen einer Spannung zwischen 48 V und 400 V, sein.

Die Kopplungseinrichtung 130 weist eine erste Seite S130a und eine zweite Seite S130b auf. Die erste Seite S130a der Kopplungseinrichtung kann mit der Batterie 110 und dem Versorgungsspannungsanschluss A100 verbunden sein. Die zweite Seite S130b der Kopplungseinrichtung 130 kann mit der mindestens einen Kontaktierungseinrichtung 120, 140 verbunden sein. Die Kopplungseinrichtung 130 kann ein Gleichspannungswandler (DC/DC-Wandler) enthalten, damit die wechselbaren Akkus 1, 2, mit der Hauptbatterie 110 gekoppelt werden können, insbesondere dann, wenn die wechselbaren Akkus 1, 2 und die Hauptbatterie 110 ein anderes Spannungsniveau aufweisen.

Der mindestens eine wechselbare Akku 1, 2 stellt vorzugsweise an der jeweiligen Kontaktierungseinrichtung 120, 140 eine Spannung unter 60 V zum Aufladen der Batterie 110 zur Verfügung. Wenn die Batterie 110 als ein Hochvolt-Akku ausgebildet ist, der eine deutlich höhere Spannung, beispielsweise eine Spannung zwischen 48 V und 400 V erzeugt, wird eine galvanische Trennung an der Kopplungseinrichtung 130, die durch den in der Kopplungseinrichtung enthaltenen Gleichspannungswandler bewirkt wird, notwendig. Wenn die Batterie 110 an dem Versorgungsspannungsanschluss A100 eine Versorgungsspannung zur Verfügung stellt, die ebenfalls unter der von dem mindestens einen wechselbaren Akku 1, 2 erzeugten Spannung, beispielsweise ebenfalls unter 60 V, liegt, kann aus Gründen der Kostenersparnis auf die galvanische Trennung durch die Kopplungseinrichtung 130 verzichtet werden, da eine Spannung unter 60 V allgemein als nicht gefährlich eingestuft ist.

Die Kopplungseinrichtung 130 kann unidirektional ausgebildet sein, wenn der mindestens eine wechselbare Akku 1, 2 lediglich zum Erzeugen einer Ladespannung zum Aufladen der Batterie 110 vorgesehen ist. Gemäß einer möglichen Ausführungsform kann die Vorrichtung 100 dazu ausgebildet sein, den mindestens einen wechselbaren Akku 1, 2 mittels Energierückgewinnung (Rekuperation) nach einer Entladung wieder aufzuladen. Bei dieser Ausführungsform der Vorrichtung 100 kann die Kopplungseinrichtung 130, insbesondere der Gleichspannungswandler der Kopplungseinrichtung, bidirektional ausgebildet sein, um die Rekuperationsenergie in den Wechselakkus 1, 2 speichern zu können.

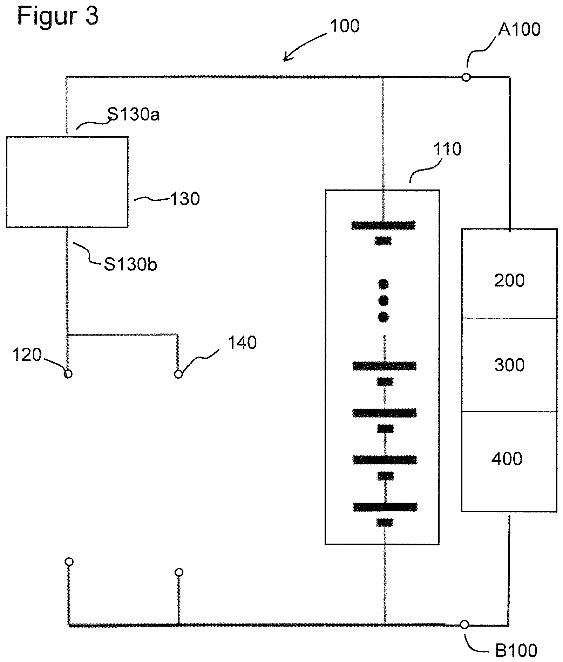

Figur 3 zeigt die in Figur 2 gezeigte Vorrichtung 100 zum Bereitstellen einer Versorgungsspannung zum Betreiben einer elektrischen Einrichtung, beispielsweise eines Elektromotors 200, des Fahrzeugs an dem Versorgungsspannungsanschluss A100, wobei an die Kontaktierungseinrichtung 120 beziehungsweise die Kontaktierungseinrichtung 140 kein wechselbaren Akkus 1 beziehungsweise 2 angeschlossen sind. Die Vorrichtung 100 umfasst somit lediglich die fest eingebaute Batterie 110, die Kopplungseinrichtung 130 sowie die Kontaktierungseinrichtungen 120, 140 zum Kontaktieren der Wechselakkus.

Bei aufgeladener Batterie 110 kann von der Batterie 110 eine ausreichende Leistung bereitgestellt werden, um eine geforderte Leistung, beispielsweise einen Strom von 200A, zu liefern beziehungsweise eine geforderte Betriebsdauer des Elektromotors 200 zu ermöglichen. Das Aufladen der Batterie 110 ist nicht nur über die wechselbaren Akkus 1, 2 möglich. Zum Aufladen der Batterie 110 kann an den Versorgungsspannungsanschluss A100 ein Ladegerät 300, beispielsweise ein On-Board-Ladegerät des Fahrzeugs 10, angeschlossen sein. Die Batterie 110 wird dann nicht über einen der wechselbaren Akkus, sondern über das Ladegerät 300 aufgeladen. Zum Aufladen der Batterie 110 muss das Ladegerät 300 an eine Steckdose zum Bereitstellen einer notwendigen Ladespannung angeschlossen werden.

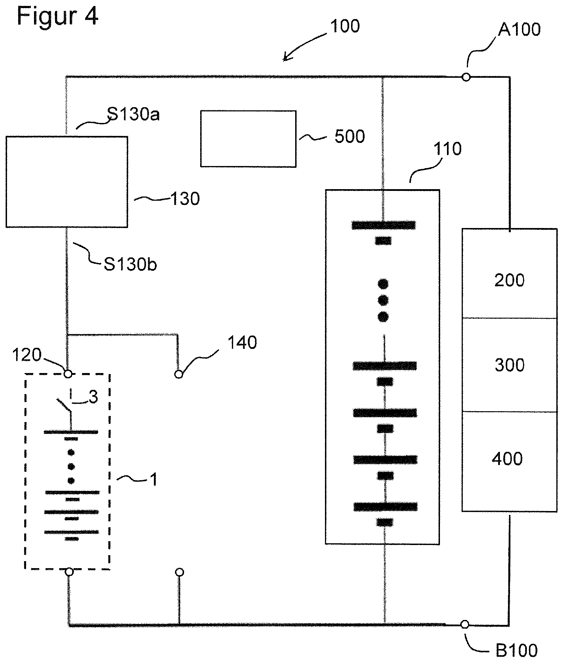

Figur 4 zeigt die in Figur 2 gezeigte Vorrichtung 100 zum Bereitstellen der Versorgungsspannung zum Betreiben einer elektrischen Einrichtung, beispielsweise eines Elektromotors 200, eines Fahrzeugs, bei der nur ein wechselbarer Akku 1 mit der Kontaktierungseinrichtung 120 gekoppelt ist, während an die Kontaktierungseinrichtung 140 kein wechselbarer Akku angeschlossen ist.

Ein Steuergerät 500 ist vorgesehen, um die von der Batterie 110 bereitgestellte Versorgungsspannung sowie die von dem wechselbaren Akku 1 zur Verfügung gestellte Ladespannung zum Laden der Batterie 110 zu überwachen und die Kopplungseinrichtung 130 zu steuern. Wenn das Steuergerät 500 feststellt, dass die Batterie 110 ausreichend geladen ist, sodass die Versorgungsspannung zum Betreiben der elektrischen Einrichtung, insbesondere des Elektromotors 200, des Fahrzeugs von der Batterie 110 bereitgestellt werden kann, steuert das Steuergerät 500 die Kopplungseinrichtung 130 derart, dass der wechselbare Akku 1 von der Batterie 110 entkoppelt beziehungsweise getrennt ist. Wenn das Steuergerät 500 hingegen feststellt, dass der Pegel der von der Batterie 110 bereitgestellten Versorgungsspannung gleich einem ersten Schwellwert ist oder unter den ersten Schwellwert abfällt, wird die Kopplungseinrichtung 130 von dem Steuergerät 500 derart angesteuert, dass der wechselbare Akku 1 zum Laden der Hauptbatterie über die Kopplungseinrichtung 130 mit der Hauptbatterie 110 elektrisch gekoppelt wird.

Die Kopplungseinrichtung 130 kann dazu ausgebildet sein, den wechselbaren Acku 1 mit der Batterie 110 elektrisch zu koppeln und an der ersten Seite S130a der Kopplungseinrichtung 130 einen Ladestrom zum Laden der Batterie 110 zu erzeugen, wenn der wechselbare Akku 1 mit der Kontaktierungseinrichtung 120 kontaktiert ist und der Pegel der von der Batterie 110 an dem Versorgungsspannungsanschluss A100 bereitgestellten Versorgungsspannung kleiner oder gleich dem ersten Schwellwert ist und der Pegel der von dem wechselbaren Akku 1 an der Kontaktierungseinrichtung 120 erzeugten Ladespannung über einen zweiten Schwellwert liegt. Wenn von dem Steuergerät 500 somit festgestellt wird, dass die fest eingebaute Batterie 110 beispielweise nicht mehr vollständig geladen ist, kann Energie aus dem wechselbaren Akku 1 entnommen werden und die Batterie 110 wieder aufgeladen werden.

Die Kopplungseinrichtung 130 kann des Weiteren dazu ausgebildet sein, den wechselbaren Akku 1 von der Batterie 110 elektrisch zu trennen, wenn der wechselbare Akku 1 mit der Kontaktierungseinrichtung 120 kontaktiert ist und der Pegel der von der Batterie 110 an dem Versorgungsspannungsanschluss A100 bereitgestellten Versorgungsspannung über dem ersten Schwellwert liegt. Wenn das Steuergerät 500 beispielsweise feststellt, dass infolge der Aufladung der Batterie 110 durch den wechselbaren Akku 1, die Batterie 110 wieder ausreichend geladen ist, steuert das Steuergerät 500 die Kopplungseinrichtung 130 derart an, dass der wechselbare Akku 1 von der Batterie 110 getrennt wird.

Zum Verbinden und Trennen des wechselbaren Akkus 1 von der fest eingebauten Batterie 110 kann der wechselbare Akku 1 beispielsweise ein steuerbares Schaltelement 3 aufweisen, dessen Schaltzustand von der Kopplungseinrichtung 130 oder unmittelbar von dem Steuergerät 500 gesteuert werden kann. Wenn die Vorrichtung 100 lediglich nur einen wechselbaren Akku 1 aufweist, kann auf das Schaltelement 3 verzichtet werden, da die Kopplungseinrichtung 130 und insbesondere der darin enthaltene Gleichspannungswandler den wechselbaren Akku 1 auch intern von der fest eingebauten Batterie 110 elektrisch trennen kann.

Gemäß einer weiteren möglichen Ausführungsform kann der Versorgungsspannungsanschluss A100 zum Anlegen einer weiteren Ladespannung, die zum Laden des wechselbaren Akkus 1 dient, ausgebildet sein. Die erste Seite S130a der Kopplungseinrichtung 130 ist mit dem Versorgungsspannungsanschluss A100 verbunden. Die Kopplungseinrichtung 130 ist dazu ausgebildet, den wechselbaren Akku 1 in Abhängigkeit von dem Ladezustand des wechselbaren Akkus beziehungsweise in Abhängigkeit von dem Pegel der von dem wechselbaren Akku an der Kontaktierungseinrichung 120 erzeugten Ladespannung mit dem Versorgungsspannungsanschluss A100 zu verbinden, wenn der wechselbare Akku 1 mit der Kontaktierungseinrichtung 120 kontaktiert ist und an dem Versorgungsspannungsanschluss A100 die weitere Ladespannung zum Laden des wechselbaren Akkus 1 anliegt.

Gemäß dieser Ausführungsform der Vorrichtung 100 lässt sich der wechselbare Akku 1 in einem Rekuperationsbetrieb der Vorrichtung 100 aufladen, indem an dem Versorgungsspannungsanschluss A100 die weitere Ladespannung durch Energierückgewinnung der kinematischen Fahrzeugenergie des Fahrzeugs 10a, 10b angelegt wird. Während des Rekuperationsbetriebs wirkt der Motor 200 als Generator und erzeugt an dem Versorgungsspannungsanschluss A100 die weitere Ladespannung zum Aufladen des Wechselakkus 1.

Wenn das Steuergerät 500 feststellt, dass der Spannungspegel des wechselbaren Akkus 1 an der Kontaktierungseinrichtung 120 gleich dem zweiten Schwellwert ist oder unter den zweiten Schwellwert abgesunken ist, wird der wechselbare Akku 1 über die Kopplungseinrichtung 130 mit dem Versorgungsspannungsanschluss A100 verbunden und kann wieder nachgeladen werden. Die Kopplungseinrichtung 130 ist bei dieser Ausführungsform dazu ausgebildet, an der zweiten Seite S130b der Kopplungseinrichtung 130 einen Ladestrom zum Laden des wechselbaren Akku 1 zu erzeugen, wenn der wechselbare Akku 1 mit der Kontaktierungseinrichtung 120 kontaktiert ist und der Pegel der von dem wechselbaren Akku 1 an der Kontaktierungseinrichtung 120 erzeugten Ladespannung kleiner oder gleich dem zweiten Schwellwert ist. Nach dem Aufladen des Wechselakkus 1 kann dieser wieder Energie zum Nachladen der fest eingebauten Fahrzeugbatterie 110 zur Verfügung stellen.

Während des Rekuperationsbetriebs kann die kinematische Fahrzeugenergie auch dazu verwendet werden, die Batterie 110 aufzuladen. Wenn die Batterie 110 und der Wechselakku 1 einen niedrigen Ladezustand aufweisen, kann zum Beispiel während des Rekuperationsbetriebs zunächst die Batterie 110 und anschließend der Wechselakku 1 nachgeladen werden.

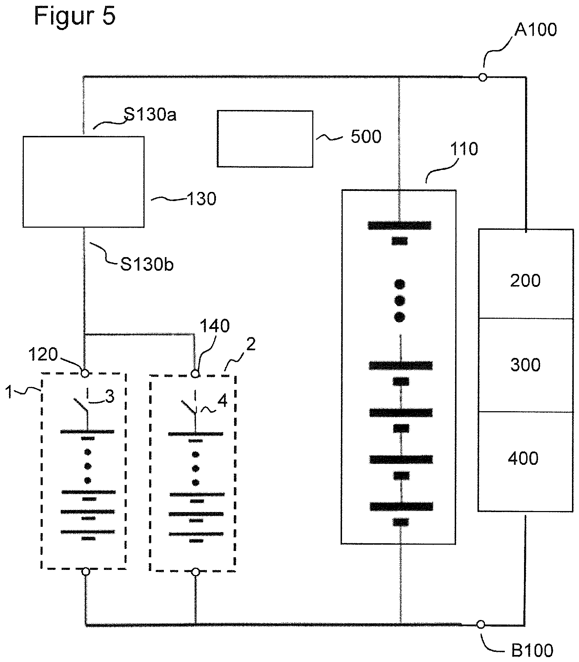

Figur 5 zeigt die in Figur 2 gezeigte Vorrichtung 100 zum Bereitstellen einer Versorgungsspannung zum Betreiben einer elektrischen Einrichtung, insbesondere zum Betreiben des Elektromotors 200, eines Fahrzeugs. Im Unterschied zu der in Figur 4 dargestellten Ausführungsform ist bei der in Figur 5 dargestellten Ausführungsform der Vorrichtung 100 neben dem wechselbaren Akku 1 ein weiterer wechselbarer Akku 2 an die Kontaktierungseinrichtung 140 angeschlossen. Figur 5 zeigt somit den Fall, wenn mehrere Wechselakkus 1, 2 in der Vorrichtung 100 vorhanden sind.

Bei dieser Ausführungsform kann die Kopplungseinrichtung 130 derart ausgebildet sein, dass sie in Abhängigkeit von einem Ladezustand des wechselbaren Akkus 1 und des weiteren wechselbaren Akkus 2 wahlweise entweder den wechselbaren Akku 1 oder den weitere wechselbaren Akku 2 an die zweite Seite S130b der Kopplungseinrichtung 130 anschließt und an der ersten Seite S130a der Kopplungseinrichtung 130 den Ladestrom zum Laden der Batterie 110 erzeugt, wenn der wechselbare Akku 1 mit der Kontaktierungseinrichtung 120 und der weitere wechselbare Akku 2 mit der weiteren Kontaktierungseinrichtung 140 kontaktiert sind und der Ladezustand der Batterie 110 beziehungsweise der von der Batterie 110 bereitgestellte Pegel der Versorgungsspannung kleiner oder gleich dem ersten Schwellwert ist.

Die Vorrichtung 100 weist beispielsweise das Steuergerät 500 auf, das dazu ausgebildet ist, den Ladezustand der fest eingebauten Hauptbatterie 110 sowie den jeweiligen Ladezustand der Wechselakkus 1, 2 festzustellen. Wenn das Steuergerät 500 feststellt, dass die Batterie 110 vollständig geladen ist, wird die Kopplungseinrichtung 130 von dem Steuergerät 500 derart angesteuert, dass die Kopplungseinrichtung 130 die Wechselakkus 1, 2 von der Batterie 110 elektrisch trennt. Bei der in Figur 5 dargestellten Ausführungsform weisen die wechselbaren Akkus 1, 2 beispielsweise jeweils ein steuerbares Schaltelement 3, 4 auf, das von der Kopplungseinrichtung 130 oder unmittelbar dem Steuergerät 500 in den leitenden oder sperrenden Zustand geschaltet werden kann. Zum Trennen der Wechselakkus 1, 2 von dem Hauptakku 110 können die Schaltelemente 3, 4 von der Kopplungseinrichtung 130 oder unmittelbar von dem Steuergerät 500 gesperrt gesteuert werden.

Wenn das Steuergerät 500 feststellt, dass die Batterie 110 nicht vollständig geladen ist, steuert das Steuergerät 500 die Kopplungseinrichtung 130 derart an, dass die Kopplungseinrichtung 130 wahlweise einen der Wechselakkus 1, 2 über die Kopplungseinrichtung 130 mit der Batterie 110 verbindet. Beispielsweise steuert die Kopplungseinrichtung 130 zunächst den steuerbaren Schalter 3 des wechselbaren Akku 1 leitend und den steuerbaren Schalter 4 des wechselbaren Akkus 2 in den nichtleitenden Zustand. Dadurch ist der wechselbare Akku 1 mit der Hauptbatterie 110 verbunden. An der ersten Seite S130a der Kopplungseinrichtung kann in Abhängigkeit von dem Ladezustand des wechselbaren Akku 1 ein Ladestrom zum Aufladen der Batterie 110 erzeugt werden.

Wenn sich infolge des Ladevorgangs der wechselbare Akku 1 entladen hat, kann die Kopplungseinrichtung 130 oder das Steuergerät 500 den steuerbaren Schalter 3 des wechselbaren Akkus 1 in den gesperrten Zustand und den steuerbaren Schalter 4 des wechselbaren Akkus 2 in den leitenden Zustand schalten. Somit ist der wechselbare Akku 1 von der Batterie 110 getrennt und stattdessen der wechselbare Akku 2 mit der Batterie 110 verbunden. An der ersten Seite S130a der Kopplungseinrichtung 130 wird ein Ladestrom in Abhängigkeit von dem Ladezustand des wechselbaren Akkus 2 erzeugt und zum Aufladen der fest eingebauten Batterie 110 zugeführt. Wenn die Hauptbatterie 110 vollständig aufgeladen ist, trennt die Kopplungseinrichtung 130 oder das Steuergerät 500 den wechselbaren Akku 2 wieder von der Hauptbatterie 110.

Gemäß einer möglichen Ausführungsform der Vorrichtung 100 weist die Kopplungseinrichtung 130 einen bidirektionalen Gleichspannungswandler auf, mit dem es ermöglicht wird, an der ersten Seite S130a der Kopplungseinrichtung 130 einen Ladestrom zum Aufladen der Batterie 110 als auch an der zweiten Seite S130b der Kopplungseinrichtung 130 einen Ladestrom zum Aufladen der Wechselakkus 1, 2 bereitzustellen.

Bei dieser Ausführungsform der Vorrichtung 100 kann ähnlich wie bei der Ausführungsform der Figur 4 kinematische Fahrzeugenergie in eine Ladespannung zum Laden der Batterie 110 oder der Wechselakkus 1, 2 umgewandelt werden. Die Ladespannung wird durch Rekuperation an dem Versorgungsspannungsanschluss A100 von dem während des Rekuperationsbetriebs als Generator wirkenden Motor 200 beim Fahren, zum Beispiel beim Bergabfahren, zur Verfügung gestellt. Über die Kopplungseinrichtung 130 kann einer der Wechselakkus 1, 2 wahlweise zum Nachladen mit dem Versorgungsspannungsanschluss A100 verbunden werden.

Die Kopplungseinrichtung 130 kann dazu derart ausgebildet sein, dass sie in Abhängigkeit von einem Ladezustand des wechselbaren Akku 1 und des weiteren wechselbaren Akku 2 wahlweise den wechselbaren Akku 1 oder den weiteren wechselbaren Akku 2 an die zweite Seite S130b der Kopplungseinrichtung 130 anschließt und an der zweiten Seite S130b der Kopplungseinrichtung den Ladestrom zum Laden des wechselbaren Akkus 1 oder des weiteren wechselbaren Akkus 2 erzeugt, wenn der wechselbare Akku 1 mit der Kontaktierungseinrichtung 120 und der weitere wechselbare Akku 2 mit der weiteren Kontaktierungseinrichtung 140 kontaktiert ist und mindestens einer des Pegels der von dem wechselbaren Akku 1 an der Kontaktierungseinrichtung 120 erzeugten Ladespannung und des Pegels der von dem weiteren wechselbaren Akku 2 an der weiteren Kontaktierungseinrichtung 140 erzeugten Ladespannung kleiner oder gleich dem zweiten Schwellwert ist.

Wenn die Batterie 110 einen niedrigen Ladezustand aufweist, kann im Rekuperationsbetrieb der Vorrichtung 100 beispielsweise zunächst die Batterie 110 nachgeladen werden. Wenn das Steuergerät 500 feststellt, dass zum Beispiel die fest eingebaute Batterie 110 vollständig geladen ist, können die Wechselakkus 1, 2 über die Kopplungseinrichtung 130 mit dem Versorgungsspannungsanschluss A100 verbunden werden, um von dem Antrieb 200 rückgewonnene Energie in den Wechselakkus zu speichern. Wenn das Steuergerät 500 beispielsweise feststellt, dass der wechselbare Akku 1 nicht mehr vollständig geladen ist, kann die Kopplungseinrichtung 130 von dem Steuergerät 500 derart angesteuert werden, dass der steuerbare Schalter 3 des Wechselakkus 1 von der Kopplungseinrichtung 130 in den leitenden Zustand und der steuerbare Schalter 4 des Wechselakkus 2 in den gesperrten Zustand geschaltet werden. Dadurch ist der Wechselakku 1 mit dem Versorgungsspannungsanschluss A100, an dem die Ladespannung zum Aufladen des Wechselakkus 1 bereitgestellt wird, verbunden und der Wechselakku 1 kann wieder vollständig aufgeladen werden.

Wenn das Steuergerät 500 feststellt, dass der wechselbare Akku 1 wieder vollständig geladen ist, kann die Kopplungseinrichtung 130 von dem Steuergerät 500 derart angesteuert werden, dass die Kopplungseinrichtung 130 den steuerbaren Schalter 3 des Wechselakkus 1 in den gesperrten Zustand und den steuerbaren Schalter 4 des Wechselakkus 2 in den leitenden Zustand schaltet. Dadurch ist der Wechselakku 1 von dem Versorgungsspannungsanschluss A100 getrennt und der Wechselakku 2 stattdessen mit dem Versorgungsspannungsanschluss A100 verbunden.

Durch die an dem Versorgungsspannungsanschluss A100 bereitgestellte Ladespannung kann nun der Wechselakku 2 aufgeladen werden. Wenn das Steuergerät 500 feststellt, dass auch der Wechselakku 2 wieder vollständig geladen ist, kann das Steuergerät 500 die Kopplungseinrichtung 130 derart ansteuern, dass der steuerbare Schalter 4 von der Kopplungseinrichtung 130 in den gesperrten Zustand gesteuert wird, sodass beide Wechselakkus von dem Versorgungsspannungsanschluss A100 getrennt sind.

Die steuerbaren Schalter 3 und 4 der Wechselakkus 1 und 2 können bei einer anderen Ausführungsform der Vorrichtung 100 auch unmittelbar von dem Steuergerät 500 in den leitenden oder sperrenden Zustand geschaltet werden.

Die von der Vorrichtung 100 an dem Versorgungsspannungsanschluss A100 bereitgestellte Versorgungsspannung kann zum Betreiben von beliebigen elektrischen Einrichtungen eines Fahrzeugs, in dem die Vorrichtung 100 enthalten ist, verwendet werden. Diese elektrischen Einrichtungen können beispielsweise der bereits erwähnte Elektromotor 200 aber auch beliebige andere elektrische Verbraucher sein, die beispielsweise eine geringere Spannung benötigen als die Spannung, die von der Batterie 110 erzeugt wird. Zum Betreiben solcher elektrischen Verbraucher kann an den Versorgungsspannungsanschluss A100 beispielsweise ein Gleichspannungswandler 400 angeschlossen sein, über den die Versorgungsspannung auf einen niedrigeren Spannungspegel, beispielsweise auf einen Spannungspegel von 12 V, herabgesetzt und in das Fahrzeugbordnetz eingespeist wird.

### Bezugszeichenliste

- 1, 2: wechselbare Akkus
- 10a, 10b: Fahrzeug
- 100: Vorrichtung zum Bereitstellen einer Versorgungsspannung
- 110: Batterie
- 120: Kontaktierungseinrichtung
- 130: Kopplungseinrichtung
- 140: Kontaktierungseinrichtung
- 200: Elektromotor
- 300: Ladegerät
- 400: Gleichspannungswandler
- 500: Steuergerät

## Patentansprüche

1. Vorrichtung zum Bereitstellen einer Versorgungsspannung zum Betreiben einer elektrischen Einrichtung eines Fahrzeugs, umfassend:
- einen Versorgungsspannungsanschluss (A100) zum Bereitstellen der Versorgungsspannung zum Betreiben der elektrischen Einrichtung (200) des Fahrzeugs (10a, 10b),
- eine in der Vorrichtung fest eingebaute Batterie (110) zum Erzeugen der Versorgungsspannung zum Betreiben der elektrischen Einrichtung (200) des Fahrzeugs (10a, 10b), wobei die Batterie (110) an den Versorgungsspannungsanschluss (A100) angeschlossen ist,
- einen wechselbaren Akku (1) und mindestens einen weiteren wechselbaren Akku (2),
- eine Kontaktierungseinrichtung (120) zur Kontaktierung des wechselbaren Akkus (1) und mindestens eine weitere Kontaktierungseinrichtung (140) zur Kontaktierung des mindestens einen weiteren wechselbaren Akkus (2) zum Bereitstellen einer Ladespannung zum Aufladen der Batterie (110),
- eine Kopplungseinrichtung (130) zum elektrischen Koppeln des wechselbaren Akkus (1) und des mindestens einen weiteren wechselbaren Akkus (2) mit der Batterie (110) zum Laden der Batterie (110) und mit dem Versorgungsanschluss (A100), wobei die Kopplungseinrichtung (130) zwischen der Batterie (110) und der Kontaktierungseinrichtung (120) und der weiteren Kontaktierungseinrichtung (140) angeordnet ist und einen Gleichspannungswandler enthält,
- ein Steuergerät (500), das dazu ausgebildet ist, den Ladezustand der Batterie (110) und den jeweiligen Ladezustand des wechselbaren Akkus (1) und des weiteren wechselbaren Akkus (2) festzustellen,
- wobei die Kopplungseinrichtung (130) dazu ausgebildet ist, den wechselbaren Akku (1) und den mindestens einen weiteren wechselbaren Akku (2) in Abhängigkeit von einem Ladezustand der Batterie (110) mit der Batterie (110) elektrisch zu koppeln oder zu trennen, wenn der wechselbare Akku (1) mit der Kontaktierungseinrichtung (120) und der mindestens eine weitere wechselbare Akku (2) mit der mindestens einen weiteren Kontaktierungseinrichtung (140) kontaktiert ist,
- wobei der wechselbare Akku (1) und der mindestens eine weitere wechselbare Akku (2) jeweils einen steuerbaren Schalter (3, 4) zum Trennen und Verbinden des wechselbaren Akkus (1) und des mindestens einen weiteren wechselbaren Akkus (2) von und mit der Batterie (110) aufweisen,
- wobei das Steuergerät (500) dazu ausgebildet ist, die Kopplungseinrichtung (130) derart anzusteuern, dass die Kopplungseinrichtung (130) den wechselbaren Akku (1) oder den weiteren wechselbaren Akku (2) mit der Batterie (110) koppelt, indem die steuerbaren Schalter (3, 4) in den leitenden Zustand gesteuert werden, wenn das Steuergerät (500) feststellt, dass der Pegel der von der Batterie (110) bereitgestellten Versorgungsspannung kleiner oder gleich einem ersten Schwellwert ist und der Pegel der von dem wechselbaren Akku (1) oder der Pegel der von dem mindestens einen weiteren wechselbaren Akku (2) erzeugten Ladespannung über einem zweiten Schwellwert liegt,
- wobei das Steuergerät (500) dazu ausgebildet ist, die Kopplungseinrichtung (130) derart anzusteuern, dass die Kopplungseinrichtung (130) den wechselbaren Akku (1) und den weiteren wechselbaren Akku (2) von der Batterie (110) trennt, indem die steuerbaren Schalter (3, 4) gesperrt gesteuert werden, wenn das Steuergerät (500) feststellt, dass der Pegel der von der Batterie (110) bereitgestellten Versorgungsspannung über dem ersten Schwellwert liegt.

2. Vorrichtung nach Anspruch 1,
- wobei die Kopplungseinrichtung (130) eine erste Seite (S130a) und eine zweite Seite (S130b) aufweist,
- wobei die erste Seite (S130a) der Kopplungseinrichtung (130) mit der Batterie (110) und die zweite Seite (S130b) der Kopplungseinrichtung (130) mit der Kontaktierungseinrichtung (120) verbunden ist.

3. Vorrichtung nach Anspruch 1 oder 2,
- wobei der Versorgungsspannungsanschluss (A100) zum Anlegen einer weiteren Ladespannung zum Laden des wechselbaren Akkus (1) ausgebildet ist,
- wobei die erste Seite (S130a) der Kopplungseinrichtung (130) mit dem Versorgungsspannungsanschluss (A100) verbunden ist,
- wobei die Kopplungseinrichtung (130) dazu ausgebildet ist, den wechselbaren Akku (1) in Abhängigkeit von dem Pegel der von dem wechselbaren Akku (1) an der Kontaktierungseinrichtung (120) erzeugten Ladespannung mit dem Versorgungsspannungsanschluss (A100) zu verbinden, wenn der wechselbare Akku (1) mit der Kontaktierungseinrichtung (120) kontaktiert ist und an dem Versorgungsspannungsanschluss (A100) die weitere Ladespannung anliegt.

4. Vorrichtung nach Anspruch 3,
wobei die Kopplungseinrichtung (130) dazu ausgebildet ist, an der zweiten Seite (S130b) der Kopplungseinrichtung (130) einen Ladestrom zum Laden des wechselbaren Akkus (1) zu erzeugen, wenn der wechselbare Akku (1) mit der Kontaktierungseinrichtung (120) kontaktiert ist und der Pegel der von dem wechselbaren Akku (1) an der Kontaktierungseinrichtung (120) erzeugten Ladespannung kleiner oder gleich dem zweiten Schwellwert ist.

5. Vorrichtung nach einem der Ansprüche 1 bis 4,
wobei die Kopplungseinrichtung (130) derart ausgebildet ist, dass sie in Abhängigkeit von einem Ladezustand des wechselbaren Akkus (1) und des mindestens einen weiteren wechselbaren Akkus (2) wahlweise den wechselbaren Akku (1) oder den mindestens einen weiteren wechselbaren Akku (2) an die zweite Seite (S130b) der Kopplungseinrichtung (130) anschließt und an der ersten Seite (S130a) der Kopplungseinrichtung (130) den Ladestrom zum Laden der Batterie (110) erzeugt, wenn der wechselbare Akku (1) mit der Kontaktierungseinrichtung (120) und der mindestens eine weitere wechselbare Akku (2) mit der mindestens einen weiteren Kontaktierungseinrichtung (140) kontaktiert ist und der von der Batterie (110) bereitgestellte Pegel der Versorgungsspannung kleiner oder gleich dem ersten Schwellwert ist.

6. Vorrichtung nach Anspruch 5,
wobei die Kopplungseinrichtung (130) derart ausgebildet ist, dass sie in Abhängigkeit von einem Ladezustand des wechselbaren Akkus (1) und des mindestens einen weiteren wechselbaren Akkus (2) wahlweise den wechselbaren Akku (1) oder den mindestens einen weiteren wechselbaren Akku (2) an die zweite Seite (S130b) der Kopplungseinrichtung (130) anschließt und an der zweiten Seite (S130b) der Kopplungseinrichtung (130) den Ladestrom zum Laden des wechselbaren Akkus (1) oder des mindestens einen weiteren wechselbaren Akkus (2) erzeugt, wenn der wechselbare Akku (1) mit der Kontaktierungseinrichtung (120) und der mindestens eine weitere wechselbare Akku (2) mit der mindestens einen weiteren Kontaktierungseinrichtung (140) kontaktiert ist und mindestens einer des Pegels der von dem wechselbaren Akku (1) an der Kontaktierungseinrichtung (120) erzeugten Ladespannung und des Pegels der von dem mindestens einen weiteren wechselbaren Akku (2) an der mindestens einen weiteren Kontaktierungseinrichtung (140) erzeugten Ladespannung kleiner oder gleich dem zweiten Schwellwert ist.

7. Vorrichtung nach einem der Ansprüche 1 bis 6,
wobei die Kopplungseinrichtung (130) einen Gleichspannungswandler umfasst.

8. Vorrichtung nach einem der Ansprüche 1 bis 7,
wobei die von der Vorrichtung (100) bereitgestellte Versorgungsspannung zum Betreiben eines Elektromotors (200) des Fahrzeugs (10), der zum Antreiben des Fahrzeugs (10) geeignet ist, ausgebildet ist.

9. Elektrisch angetriebenes Fahrzeug, umfassend:
- eine Vorrichtung (100) zum Bereitstellen einer Versorgungsspannung zum Betreiben des Fahrzeugs nach einem der Ansprüche 1 bis 8,
- wobei an den Versorgungsspannungsanschluss (A100) ein Elektromotor (200) des Fahrzeugs zum Antreiben des Fahrzeugs (10) und/oder ein Generator (300) des Fahrzeugs und/oder ein Gleichspannungswandler (400) des Fahrzeugs angeschlossen ist.

10. Verfahren zum Bereitstellen einer Versorgungsspannung zum Betreiben einer elektrischen Einrichtung eines Fahrzeugs, umfassend:
- Bereitstellen einer Vorrichtung (100) zum Bereitstellen der Versorgungsspannung zum Betreiben der elektrischen Einrichtung (200) eines Fahrzeugs (10a, 10b) nach einem der Ansprüche 1 bis 8,
- Koppeln des wechselbaren Akkus (1) oder des mindestens einen weiteren wechselbaren Akkus (2) mit der Batterie (110) durch Steuern des steuerbaren Schalters (3) des wechselbaren Akkus (1) oder des steuerbaren Schalters (4) des mindestens einen weiteren Akkus (2) in den leitenden Zustand, wenn der Pegel der von der Batterie (110) bereitgestellten Versorgungsspannung kleiner oder gleich einem ersten Schwellwert ist und der Pegel der von dem wechselbaren Akku (1) oder der Pegel der von dem mindestens einen weiteren wechselbaren Akku (2) erzeugten Ladespannung über einem zweiten Schwellwert liegt,
- Erzeugen eines in die Batterie (110) fließenden Ladestroms in Abhängigkeit von der Ladespannung des wechselbaren Akkus (1) oder des mindestens einen weiteren wechselbaren Akkus (2),
- Trennen des wechselbaren Akkus (1) und des mindestens einen weiteren wechselbaren Akkus (2) von der Batterie (110) durch Steuern des steuerbaren Schalters (3) des wechselbaren Akkus (1) und des steuerbaren Schalters (4) des mindestens einen weiteren wechselbaren Akkus (2) in den gesperrten Zustand, wenn der Pegel der von der Batterie (110) bereitgestellten Versorgungsspannung über dem ersten Schwellwert liegt.

11. Verfahren nach Anspruch 10, umfassend:
- Anlegen einer weiteren Ladespannung zum Aufladen des wechselbaren Akkus (1) an den Versorgungsspannungsanschluss (A100),
- Koppeln des wechselbaren Akkus (1) mit dem Versorgungsspannungsanschluss (A100), wenn der Pegel der von dem wechselbaren Akku (1) an der Kontaktierungseinrichtung (120) bereitgestellten Ladespannung kleiner oder gleich dem zweiten Schwellwert ist,
- Erzeugen eines in den wechselbaren Akku (1) fließenden Ladestroms zum Aufladen des wechselbaren Akkus (1),
- Trennen des wechselbaren Akkus (1) von dem Versorgungsspannungsanschluss (A100), wenn der Pegel der von dem wechselbaren Akku (1) an der Kontaktierungseinrichtung (120) erzeugten Ladespannung größer als der zweite Schwellwert ist.

12. Verfahren nach einem der Ansprüche 10 oder 11, umfassend:
Koppeln des mindestens einen weiteren wechselbaren Akkus (2) mit der Batterie (110), wenn der Pegel der von der Batterie (110) bereitgestellten Versorgungsspannung kleiner oder gleich dem ersten Schwellwert ist und der Pegel der von dem wechselbaren Akku (1) erzeugten Ladespannung kleiner oder gleich dem zweiten Schwellwert ist und der Pegel der von dem mindestens einen weiteren wechselbaren Akku (2) erzeugten Ladespannung größer als der zweite Schwellwert ist.

13. Verfahren nach einem der Ansprüche 11 oder 12, umfassend:
- Koppeln des mindestens einen weiteren wechselbaren Akkus (2) mit dem Versorgungsspannungsanschluss (A100), wenn der Pegel der von dem mindestens einen weiteren wechselbaren Akku (2) erzeugten Ladespannung kleiner oder gleich dem zweiten Schwellwert ist,
- Erzeugen eines in den mindestens einen weiteren wechselbaren Akku (2) fließenden Ladestroms zum Laden des mindestens einen weiteren wechselbaren Akkus (2),
- Trennen des mindestens einen weiteren wechselbaren Akkus (2) von dem Versorgungsspannungsanschluss (A100), wenn der Pegel der von dem mindestens einen weiteren wechselbaren Akku (2) erzeugten Ladespannung über dem zweiten Schwellwert liegt.

## Claims

1. Apparatus for providing a supply voltage for operating an electric device of a vehicle, comprising:
- a supply voltage connection (A100) for providing the supply voltage for operating the electric device (200) of the vehicle (10a, 10b),
- a battery (110), permanently installed in the apparatus, for producing the supply voltage for operating the electric device (200) of the vehicle (10a, 10b), wherein the battery (110) is connected to the supply voltage connection (A100),
- a replaceable storage battery (1) and at least one further replaceable storage battery (2),
- a contact-connection device (120) for making contact with the replaceable storage battery (1) and at least one further contact-connection device (140) for making contact with the at least one further replaceable storage battery (2) to provide a charging voltage for charging the battery (110),
- a coupling device (130) for electrically coupling the replaceable storage battery (1) and the at least one further replaceable storage battery (2) to the battery (110) to charge the battery (110) and to the supply connection (A100), wherein the coupling device (130) is arranged between the battery (110) and the contact-connection device (120) and the further contact-connection device (140) and contains a DC-DC voltage converter,
- a control unit (500) designed to ascertain the state of charge of the battery (110) and the respective states of charge of the replaceable storage battery (1) and the further replaceable storage battery (2),
- wherein the coupling device (130) is designed to electrically couple or isolate the replaceable storage battery (1) and the at least one further replaceable storage battery (2) to/from the battery (110) on the basis of a state of charge of the battery (110) when the replaceable storage battery (1) is in contact with the contact-connection device (120) and the at least one further replaceable storage battery (2) is in contact with the at least one further contact-connection device (140),
- wherein the replaceable storage battery (1) and the at least one further replaceable storage battery (2) each have a controllable switch (3, 4) for isolating and connecting the replaceable storage battery (1) and the at least one further replaceable storage battery (2) from and to the battery (110),
- wherein the control unit (500) is designed to control the coupling device (130) in such a way that the coupling device (130) couples the replaceable storage battery (1) or the further replaceable storage battery (2) to the battery (110) by switching the controllable switches (3, 4) to the on state if the control unit (500) ascertains that the level of the supply voltage provided by the battery (110) is less than or equal to a first threshold value and the level of the charging voltage produced by the replaceable storage battery (1) or the level of the charging voltage produced by the at least one further replaceable storage battery (2) is above a second threshold value,
- wherein the control unit (500) is designed to control the coupling device (130) in such a way that the coupling device (130) isolates the replaceable storage battery (1) and the further replaceable storage battery (2) from the battery (110) by switching off the controllable switches (3, 4) if the control unit (500) ascertains that the level of the supply voltage provided by the battery (110) is above the first threshold value.

2. Apparatus according to Claim 1,
- wherein the coupling device (130) has a first side (S130a) and a second side (S130b),
- wherein the first side (S130a) of the coupling device (130) is connected to the battery (110) and the second side (S130b) of the coupling device (130) is connected to the contact-connection device (120).

3. Apparatus according to Claim 1 or 2,
- wherein the supply voltage connection (A100) is designed to apply a further charging voltage for charging the replaceable storage battery (1),
- wherein the first side (S130a) of the coupling device (130) is connected to the supply voltage connection (A100),
- wherein the coupling device (130) is designed to connect the replaceable storage battery (1) to the supply voltage connection (A100) on the basis of the level of the charging voltage produced by the replaceable storage battery (1) on the contact-connection device (120) when the replaceable storage battery (1) is in contact with the contact-connection device (120) and the further charging voltage is applied to the supply voltage connection (A100).

4. Apparatus according to Claim 3,
wherein the coupling device (130) is designed to produce, on the second side (S130b) of the coupling device (130), a charging current for charging the replaceable storage battery (1) when the replaceable storage battery (1) is in contact with the contact-connection device (120) and the level of the charging voltage produced by the replaceable storage battery (1) on the contact-connection device (120) is less than or equal to the second threshold value.

5. Apparatus according to one of Claims 1 to 4,
wherein the coupling device (130) is designed such that it takes a state of charge of the replaceable storage battery (1) and of the at least one further replaceable storage battery (2) as a basis for connecting either the replaceable storage battery (1) or the at least one further replaceable storage battery (2) to the second side (S130b) of the coupling device (130) and, on the first side (S130a) of the coupling device (130), producing the charging current for charging the battery (110) when the replaceable storage battery (1) is in contact with the contact-connection device (120) and the at least one further replaceable storage battery (2) is in contact with the at least one further contact-connection device (140) and the level of the supply voltage that is provided by the battery (110) is less than or equal to the first threshold value.

6. Apparatus according to Claim 5,
wherein the coupling device (130) is designed such that it takes a state of charge of the replaceable storage battery (1) and of the at least one further replaceable storage battery (2) as a basis for connecting either the replaceable storage battery (1) or the at least one further replaceable storage battery (2) to the second side (S130b) of the coupling device (130) and, on the second side (S130b) of the coupling device (130), producing the charging current for charging the replaceable storage battery (1) or the at least one further replaceable storage battery (2) when the replaceable storage battery (1) is in contact with the contact-connection device (120) and the at least one further replaceable storage battery (2) is in contact with the at least one further contact-connection device (140) and at least one from the level of the charging voltage produced by the replaceable storage battery (1) on the contact-connection device (120) and the level of the charging voltage produced by the at least one further replaceable storage battery (2) on the at least one further contact-connection device (140) is less than or equal to the second threshold value.

7. Apparatus according to one of Claims 1 to 6,
wherein the coupling device (130) comprises a DC-DC voltage converter.

8. Apparatus according to one of Claims 1 to 7,
wherein the supply voltage provided by the apparatus (100) is designed for operating an electric motor (200) of the vehicle (10) that is suitable for driving the vehicle (10).

9. Electrically driven vehicle comprising:
- an apparatus (100) for providing a supply voltage for operating the vehicle according to one of Claims 1 to 8,
- wherein an electric motor (200) of the vehicle for driving the vehicle (10) and/or a generator (300) of the vehicle and/or a DC-DC voltage converter (400) of the vehicle is/are connected to the supply voltage connection (A100).

10. Method for providing a supply voltage for operating an electric device of a vehicle, comprising:
- providing an apparatus (100) for providing the supply voltage for operating the electric device (200) of a vehicle (10a, 10b) according to one of Claims 1 to 8,
- coupling the replaceable storage battery (1) or the at least one further replaceable storage battery (2) to the battery (110) by switching the controllable switch (3) of the replaceable storage battery (1) or the controllable switch (4) of the at least one further storage battery (2) to the on state when the level of the supply voltage provided by the battery (110) is less than or equal to a first threshold value and the level of the charging voltage produced by the replaceable storage battery (1) or the level of the charging voltage produced by the at least one further replaceable storage battery (2) is above a second threshold value,
- producing a charging current that flows into the battery (110), on the basis of the charging voltage of the replaceable storage battery (1) or of the at least one further replaceable storage battery (2),
- isolating the replaceable storage battery (1) and the at least one further replaceable storage battery (2) from the battery (110) by switching the controllable switch (3) of the replaceable storage battery (1) and the controllable switch (4) of the at least one further replaceable storage battery (2) to the off state when the level of the supply voltage provided by the battery (110) is above the first threshold value.

11. Method according to Claim 10, comprising:
- applying a further charging voltage for charging the replaceable storage battery (1) to the supply voltage connection (A100),
- coupling the replaceable storage battery (1) to the supply voltage connection (A100) when the level of the charging voltage provided by the replaceable storage battery (1) on the contact-connection device (120) is less than or equal to the second threshold value,
- producing a charging current that flows into the replaceable storage battery (1), to charge the replaceable storage battery (1),
- isolating the replaceable storage battery (1) from the supply voltage connection (A100) when the level of the charging voltage produced by the replaceable storage battery (1) on the contact-connection device (120) is greater than the second threshold value.

12. Method according to either of Claims 10 and 11, comprising:
- coupling the at least one further replaceable storage battery (2) to the battery (110) when the level of the supply voltage provided by the battery (110) is less than or equal to the first threshold value and the level of the charging voltage produced by the replaceable storage battery (1) is less than or equal to the second threshold value and the level of the charging voltage produced by the at least one further replaceable storage battery (2) is greater than the second threshold value.

13. Method according to either of Claims 11 and 12, comprising:
- coupling the at least one further replaceable storage battery (2) to the supply voltage connection (A100) when the level of the charging voltage produced by the at least one further replaceable storage battery (2) is less than or equal to the second threshold value,
- producing a charging current that flows into the at least one further replaceable storage battery (2), to charge the at least one further replaceable storage battery (2),
- isolating the at least one further replaceable storage battery (2) from the supply voltage connection (A100) when the level of the charging voltage produced by the at least one further replaceable storage battery (2) is above the second threshold value.

## Revendications

1. Dispositif de fourniture d'une tension d'alimentation destinée au fonctionnement d'un module électrique d'un véhicule, ledit dispositif comprenant :
- une borne de tension d'alimentation (A100) destinée à fournir la tension d'alimentation destinée au fonctionnement du module électrique (200) du véhicule (10a, 10b),
- une batterie (110) installée à demeure dans le dispositif et destinée à générer la tension d'alimentation destinée au fonctionnement du module électrique (200) du véhicule (10a, 10b), la batterie (110) étant raccordée à la borne de tension d'alimentation (A100),
- un accumulateur remplaçable (1) et au moins un autre accumulateur remplaçable (2),
- un module de contact (120) destiné à contacter l'accumulateur remplaçable (1) et au moins un autre module de contact (140) destiné à contacter l'au moins un autre accumulateur remplaçable (2) pour fournir une tension de charge destinée à charger la batterie (110),
- un module de couplage (130) destiné à coupler électriquement l'accumulateur remplaçable (1) et l'au moins un autre accumulateur remplaçable (2) à la batterie (110) afin de charger la batterie (110) et à la borne d'alimentation (A100), le module de couplage (130) étant disposé entre la batterie (110) et le module de contact (120) et l'autre module de contact (140) et contenant un convertisseur continu/continu,
- un appareil de commande (500) conçu pour déterminer l'état de charge de la batterie (110) et l'état de charge respectif de l'accumulateur remplaçable (1) et de l'autre accumulateur remplaçable (2),
- le module de couplage (130) étant conçu pour coupler électriquement l'accumulateur remplaçable (1) et l'au moins un autre accumulateur remplaçable (2) à la batterie (110) en fonction d'un état de charge de la batterie (110) ou pour les séparer lorsque l'accumulateur remplaçable (1) est mis en contact avec le module de contact (120) et l'au moins un autre accumulateur remplaçable (2) est mis en contact avec l'au moins un autre module de contact (140),
- l'accumulateur remplaçable (1) et l'au moins un autre accumulateur remplaçable (2) comportant chacun un commutateur commandable (3, 4) destiné à séparer et relier l'accumulateur remplaçable (1) et l'au moins un autre accumulateur remplaçable (2) de respectivement à une batterie (110),
- l'appareil de commande (500) étant conçu pour commander le module de couplage (130) de manière que le module de couplage (130) couple l'accumulateur remplaçable (1) ou l'autre accumulateur remplaçable (2) à la batterie (110) du fait que le commutateur commandable (3, 4) est commandé dans l'état conducteur lorsque l'appareil de commande (500) détermine que le niveau de la tension d'alimentation fournie par la batterie (110) est inférieur ou égal à une première valeur de seuil et le niveau de la tension de charge générée par l'accumulateur remplaçable (1) ou le niveau de la tension de charge générée par l'au moins un autre accumulateur remplaçable (2) est supérieur à une deuxième valeur de seuil,
- l'appareil de commande (500) étant conçu pour commander le module de couplage (130) de manière que le module de couplage (130) sépare l'accumulateur remplaçable (1) et l'autre accumulateur remplaçable (2) de la batterie (110) du fait que les commutateurs commandables (3, 4) sont commandés pour être bloqués lorsque l'appareil de commande (500) détermine que le niveau de la tension d'alimentation fournie par la batterie (110) est supérieur à la première valeur de seuil.

2. Dispositif selon la revendication 1,
- le module de couplage (130) comportant un premier côté (S130a) et un deuxième côté (S130b),
- le premier côté (S130a) du module de couplage (130) étant relié à la batterie (110) et le deuxième côté (S130b) du module de couplage (130) étant relié au module de contact (120).

3. Dispositif selon la revendication 1 ou 2,
- la borne de tension d'alimentation (A100) étant conçue pour appliquer une autre tension de charge destinée à charger l'accumulateur remplaçable (1),
- le premier côté (S130a) du module de couplage (130) étant relié à la borne de tension d'alimentation (A100),
- le module de couplage (130) étant conçu pour relier l'accumulateur remplaçable (1) à la borne de tension d'alimentation (A100) en fonction du niveau de la tension de charge générée par l'accumulateur remplaçable (1) au niveau du module de contact (120) lorsque l'accumulateur remplaçable (1) est mis en contact avec le module de contact (120) et l'autre tension de charge est appliquée à la borne de tension d'alimentation (A100).

4. Dispositif selon la revendication 3,
le module de couplage (130) étant conçu pour générer un courant de charge destiné à charger l'accumulateur remplaçable (1) sur le deuxième côté (S130b) du module de couplage (130) lorsque l'accumulateur remplaçable (1) est en contact avec le module de contact (120) et que le niveau de la tension de charge générée par l'accumulateur remplaçable (1) au niveau du module de contact (120) est inférieur ou égal à la deuxième valeur de seuil.

5. Dispositif selon l'une des revendications 1 à 4,
le module de couplage (130) étant conçu de manière à, en fonction d'un état de charge de l'accumulateur remplaçable (1) et de l'au moins un autre accumulateur remplaçable (2), raccorder sélectivement l'accumulateur remplaçable (1) ou l'au moins un autre accumulateur remplaçable (2) au deuxième côté (S130b) du module de couplage (130) et générer le courant de charge destiné à charger la batterie (110) sur le premier côté (S130a) du module de couplage (130) lorsque l'accumulateur remplaçable (1) est en contact avec le module de contact (120) et que l'au moins un autre accumulateur remplaçable (2) est contact avec l'au moins un autre module de contact (140) et que le niveau de la tension d'alimentation fournie par la batterie (110) est inférieur ou égal à la première valeur de seuil.

6. Dispositif selon la revendication 5,
le module de couplage (130) étant conçu de manière à, en fonction d'un état de charge de l'accumulateur remplaçable (1) et de l'au moins un autre accumulateur remplaçable (2), raccorder sélectivement l'accumulateur remplaçable (1) ou l'au moins un autre accumulateur remplaçable (2) au deuxième côté (S130b) du module de couplage (130) et générer le courant de charge destiné à charger l'accumulateur remplaçable (1) ou l'au moins un autre accumulateur remplaçable (2) sur le deuxième côté (S130b) du module de couplage (130) lorsque l'accumulateur remplaçable (1) est en contact avec le module de contact (120) et que l'au moins un autre accumulateur remplaçable (2) est en contact avec l'au moins un autre module de contact (140) et que l'un au moins parmi le niveau de la tension de charge générée par l'accumulateur remplaçable (1) au niveau du module de contact (120) et le niveau de la tension de charge générée par l'au moins un autre accumulateur remplaçable (2) au niveau de l'au moins un autre module de contact (140) est inférieur ou égal à la deuxième valeur de seuil.

7. Dispositif selon l'une des revendications 1 à 6,
le module de couplage (130) comprenant un convertisseur continu/continu.

8. Dispositif selon l'une des revendications 1 à 7,
la tension d'alimentation fournie par le dispositif (100) étant conçue pour faire fonctionner un moteur électrique (200) du véhicule (10) qui est adapté à l'entraînement du véhicule (10).

9. Véhicule à propulsion électrique comprenant :
- un dispositif (100) destiné à fournir une tension d'alimentation destinée au fonctionnement du véhicule selon l'une des revendications 1 à 8,
- un moteur électrique (200) du véhicule destiné à entraîner le véhicule (10) et/ou un générateur (300) du véhicule et/ou un convertisseur continu/continu (400) du véhicule étant raccordés à la borne de tension d'alimentation (A100).

10. Procédé de fourniture d'une tension d'alimentation destinée à faire fonctionner un module électrique d'un véhicule, ledit procédé comprenant les étapes suivantes :
- fournir un dispositif (100) destiné à fournir la tension d'alimentation destinée au fonctionnement du module électrique (200) d'un véhicule (10a, 10b) selon l'une des revendications 1 à 8,
- coupler l'accumulateur remplaçable (1) ou l'au moins un autre accumulateur remplaçable (2) à la batterie (110) en ce que le commutateur commandable (3) de l'accumulateur remplaçable (1) ou le commutateur commandable (4) de l'au moins un autre accumulateur (2) est commandé pour passer à l'état conducteur lorsque le niveau de la tension d'alimentation fournie par la batterie (110) est inférieur ou égal à une première valeur de seuil et que le niveau de la tension de charge générée par l'accumulateur remplaçable (1) ou le niveau de la tension de charge générée par l'au moins un autre accumulateur remplaçable (2) est supérieur à une deuxième valeur de seuil,
- générer un courant de charge circulant dans la batterie (110) en fonction de la tension de charge de l'accumulateur remplaçable (1) ou de l'au moins un autre accumulateur remplaçable (2),
- séparer l'accumulateur remplaçable (1) et l'au moins un autre accumulateur remplaçable (2) de la batterie (110) en ce que le commutateur commandable (3) de l'accumulateur remplaçable (1) et le commutateur commandable (4) de l'au moins un autre accumulateur remplaçable (2) sont commandés pour passer à l'état bloqué lorsque le niveau de la tension d'alimentation fournie par la batterie (110) est supérieur à la première valeur de seuil.

11. Procédé selon la revendication 10, ledit procédé comprenant les étapes suivantes :
- appliquer une autre tension de charge destinée à charger l'accumulateur remplaçable (1) à la borne de tension d'alimentation (A100),
- coupler l'accumulateur remplaçable (1) à la borne de tension d'alimentation (A100) lorsque le niveau de la tension de charge fournie par l'accumulateur remplaçable (1) au niveau du module de contact (120) est inférieur ou égal à la deuxième valeur de seuil,
- générer un courant de charge circulant dans l'accumulateur remplaçable (1) pour charger l'accumulateur remplaçable (1),
- séparer l'accumulateur remplaçable (1) de la borne de tension d'alimentation (A100) lorsque le niveau de la tension de charge générée par l'accumulateur remplaçable (1) au niveau du module de contact (120) est supérieur à la deuxième valeur de seuil.

12. Procédé selon l'une des revendications 10 ou 11, ledit procédé comprenant l'étape suivante :
coupler l'au moins un autre accumulateur remplaçable (2) à la batterie (110) lorsque le niveau de la tension d'alimentation fournie par la batterie (110) est inférieur ou égal à la première valeur de seuil et que le niveau de la tension de charge générée par l'accumulateur remplaçable (1) est inférieur ou égal à la deuxième valeur de seuil et que le niveau de la tension de charge générée par l'au moins un autre accumulateur remplaçable (2) est supérieur à la deuxième valeur de seuil.

13. Procédé selon l'une des revendications 11 ou 12, ledit procédé comprenant les étapes suivantes :
- coupler l'au moins un autre accumulateur remplaçable (2) à la borne de tension d'alimentation (A100) lorsque le niveau de la tension de charge générée par l'au moins un autre accumulateur remplaçable (2) est inférieur ou égal à la deuxième valeur de seuil,
- générer un courant de charge circulant dans l'au moins un autre accumulateur remplaçable (2) pour charger l'au moins un autre accumulateur remplaçable (2),
- séparer l'au moins un autre accumulateur remplaçable (2) de la borne de tension d'alimentation (A100) lorsque le niveau de la tension de charge générée par l'au moins un autre accumulateur remplaçable (2) est supérieur à la deuxième valeur de seuil.
